# EUROPEAN PATENT APPLICATION

(11) **EP 3 650 219 A1**
(43) Date of publication of application: **13.05.2020**
(21) Application number: 19154434.5
(22) Date of filing: 30.01.2019
(51) Int. Cl.: B33Y 30/00

(54) **3D PRINTING DEVICE WITH DUAL TRANSMISSION MECHANISM**

(30) Priority: 12.11.2018 TW 107140092
(71) Applicant: XYZprinting, Inc., New Taipei City 22201 (TW); Kinpo Electronics, Inc., New Taipei City 22201 (TW)
(72) Inventor: LEE, Yang-Teh, 22201 New Taipei City (TW); HUANG, Chun-Hsiang, 22201 New Taipei City (TW)
(74) Representative: 2K Patentanwälte Blasberg Kewitz & Reichel

(57) **Abstract**

A 3D printing device with a dual transmission mechanism (3) includes a motor (31), a driving wheel module (310), two first driven wheels (32), two second driven wheels (33), a first longitudinal belt (34), a second longitudinal belt (35), a first latitudinal belt (36) and a second latitudinal belt (37). The driving wheel module (310) has an upper driving wheel (311) and a lower driving wheel (312) sheathed on and connected to a drive shaft (31a) of the motor (31); each first driven wheel (32) has an upper wheel area (321) and a lower wheel area (322); the first longitudinal belt (34) is sheathed on the upper driving wheel (311) and one of the upper wheel areas (321); the second longitudinal belt (35) is sheathed on the lower driving wheel (312) and one of the lower wheel areas (322); the first latitudinal belt (36) is sheathed on the other lower wheel area (322) and one of the second driven wheels (33); and the second latitudinal belt (37) is sheathed on the other upper wheel area (321) and the other second driven wheel (33).

## Description

### BACKGROUND OF THE INVENTION

### TECHNICAL FIELD

The technical field relates to a transmission structure of a 3D printing device, and more particularly to a 3D printing device with a dual transmission mechanism.

### DESCRIPTION OF RELATED ART

Three-dimensional (3D) printing is one of the rapid molding technologies using a movable print head module to stack adhesive materials such as powdered metal or plastics layer by layer to mold and manufacture "laminated" objects. At present, objects such as toys, mechanical parts, and human bones are manufactured quickly by 3D printing, so that the 3D printing has gradually become a popular technology.

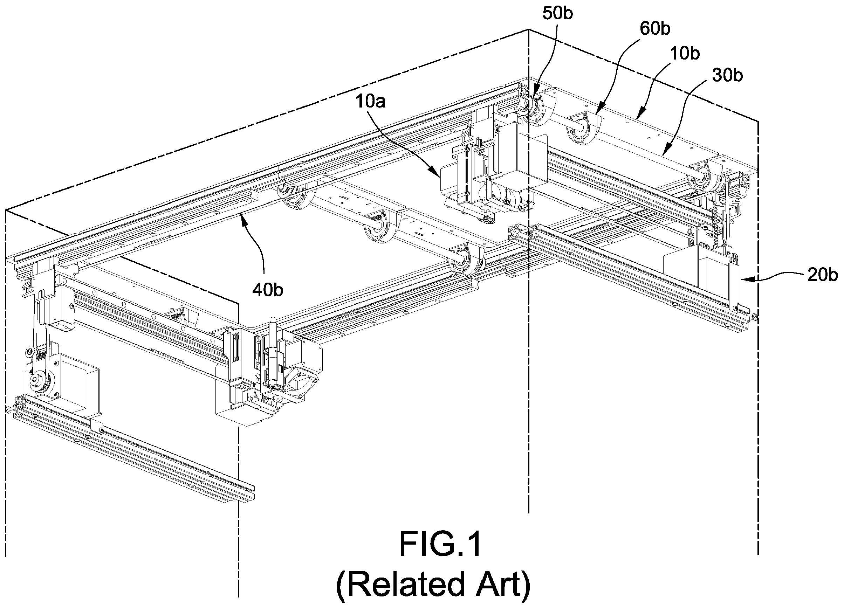

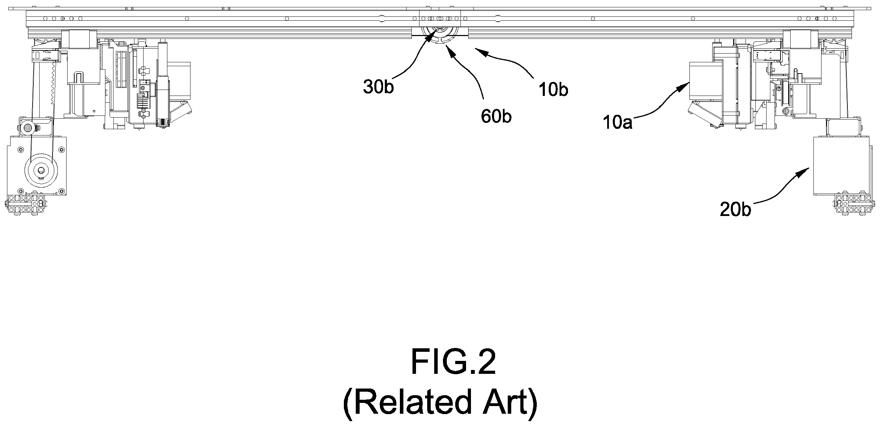

With reference to FIGS. 1 and 2 for a conventional transmission mechanism 10b of a print head module 10a, the conventional transmission mechanism 10b comprises a motor 20b, two transmission shafts 30b, two belts 40b, a plurality of pulleys 50b, and a plurality of bearing seats 60b, wherein the two transmission shafts 30b are installed in the longitudinal direction and parallel to each other on both sides of the print head module 1 respectively, and the two belts 40b are installed in the latitudinal direction and parallel to each other and sheathed on both ends of the two transmission shafts 30b respectively, and then both ends of the print head module 10a span across and are coupled to the two belts 40b respectively, and the motor 20b is coupled and provided for driving one of the transmission shafts 30b to rotate, and the two belts 40b can drive both ends of the print head module 10a to move synchronously. Wherein, the pulley 50b and the bearing seat 60b are provided for assisting the transmission shaft 30b to rotate smoothly.

However, industrial 3D printing devices generally have a plurality of print head modules 10a or additional color print head modules, so that the industrial 3D printing devices needs a plurality of transmission mechanism 10b for transmissions. The aforementioned transmission mechanisms 10b come with complicated components including the transmission shafts 30b, pulleys 50b and bearing seats 60b and require a larger volume of installation space. As a result, the industrial 3D printing devices have the issues of the large volume which cannot be reduced, the complicated structure of components and the uneasy repair and maintenance.

In view of the aforementioned drawbacks of the prior art, the discloser of this disclosure based on years of experience in the related industry to conduct extensive research and experiment, and finally developed a 3D printing device with a dual transmission mechanism to overcome the drawbacks of the prior art.

### SUMMARY OF THE INVENTION

This disclosure is directed to a 3D printing device with a dual transmission mechanism, which omits the large and complicated components such as the transmission shaft, pulley and bearing seat of the conventional 3D printing device to achieve the effects of reducing the volume of the transmission mechanism, simplifying the structure, and facilitating the repair and maintenance.

To achieve the aforementioned and other objectives, this disclosure provides a 3D printing device with a dual transmission mechanism, comprising
A D printing device with a dual transmission mechanism, comprising: a frame; a molding platform, disposed at the bottom of the frame; two transmission mechanisms, mounted onto the frame, and each of the transmission mechanisms comprising: a motor, having a drive shaft; a driving wheel module, including an upper driving wheel and a lower driving wheel, both being sheathed on and coupled to the drive shaft and operated jointly; two first driven wheels, installed onto the left and right sides of the driving wheel module respectively, and each of the first driven wheels having an upper wheel area and a lower wheel area; two second driven wheels, installed at the rear side of the two first driven wheels respectively; a first longitudinal belt, coupled to the upper driving wheel and one of the upper wheel areas; a second longitudinal belt, coupled to the lower driving wheel and one of the lower wheel areas; a first latitudinal belt, coupled to the other lower wheel area and one of the second driven wheels; and a second latitudinal belt, coupled to the other upper wheel area and the other second driven wheel; and two print head modules, spanning across and mounted onto each first latitudinal belt and each second latitudinal belt.

Wherein, this disclosure uses the lower driving wheel, lower wheel area, first driven wheel, second driven wheel, first longitudinal belt, second longitudinal belt, first latitudinal belt and second latitudinal belt to substitute the components including the transmission shaft, pulley and bearing seat of the conventional 3D printing device, so that the 3D printing device of this disclosure has the advantages of smaller volume, simpler structure, and more convenient repair and maintenance over the prior art.

Wherein, one of the second driven wheels of one of the transmission mechanisms is installed at the bottom of the second latitudinal belt of the other transmission mechanism, and the other second driven wheel is passed and installed at the top of the first latitudinal belt of the other transmission mechanism, so that each first latitudinal belt and each second latitudinal belt are stacked with respect to each other to further save the installation space of the transmission mechanism and reduce the volume of the 3D printing device.

### BRIEF DESCRIPTION OF THE DRAWINGS

FIG. 1 is a schematic view showing a using status of a conventional transmission mechanism;
FIG. 2 is a schematic view showing another using status of a conventional transmission mechanism;
FIG. 3 is a perspective view of a 3D laser printing device of this disclosure;
FIG. 4 is a perspective view of a transmission mechanism mounted onto a frame in accordance with this disclosure;
FIG. 5 is an exploded view of a transmission mechanism and a print head module in accordance with this disclosure;
FIG. 6 is a perspective view of a print head module and an auxiliary rail in accordance with this disclosure;
FIG. 7 is a side view of a print head module and an auxiliary rail in accordance with this disclosure;
FIG. 8 is a perspective view of a transmission mechanism in accordance with this disclosure;
FIG. 9 is a partial exploded view of a transmission mechanism in accordance with this disclosure; and
FIG. 10 is a schematic view of a using status of a transmission mechanism in accordance with this disclosure.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

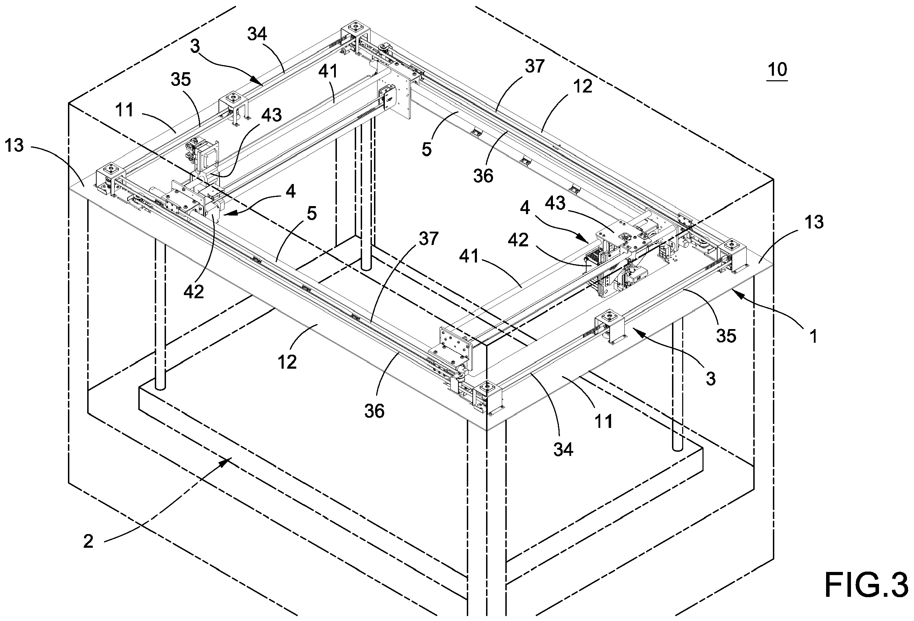

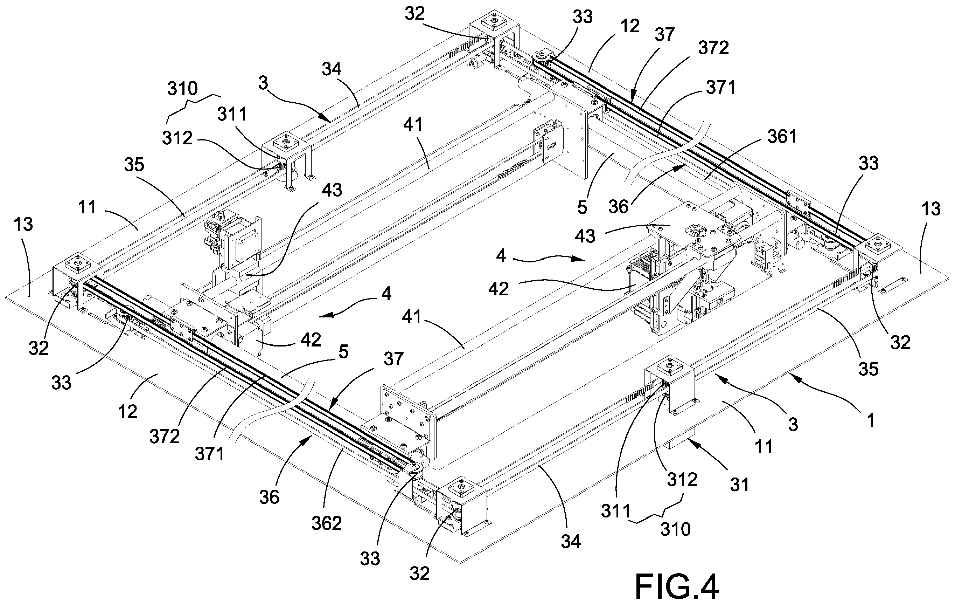

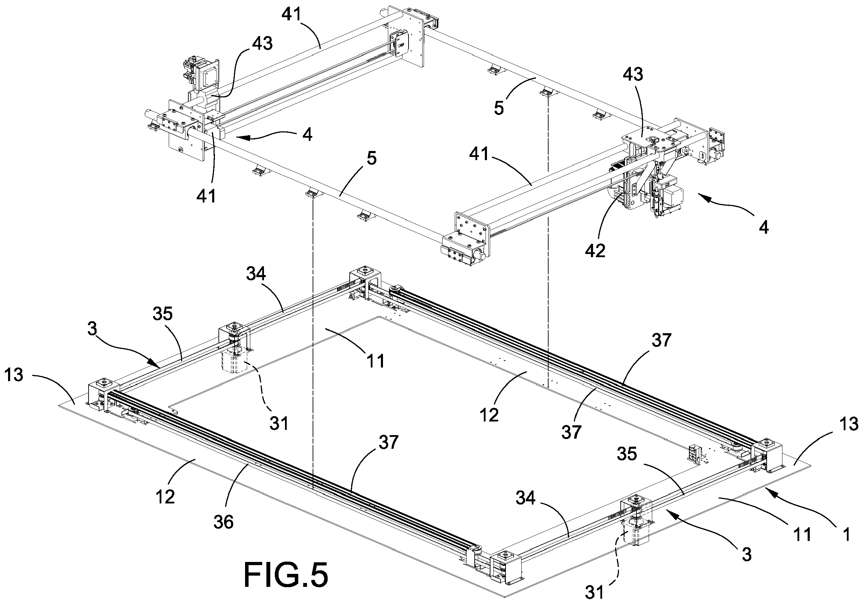

With reference to FIGS. 3 to 5 for an exemplary embodiment, a frame 1 has two opposite longitudinal sections 11, two opposite latitudinal sections 12 and four corner sections 13, and each corner section 13 is formed at the function of each longitudinal section 11 and each latitudinal section 12, so that the frame 1 is in a square shape. Of course, the frame 1 is not limited to the shape of a square only, but it may be in any other geometrical shape.

In FIG. 3, the molding platform 2 which is an elevatable platform disposed at the bottom of the frame 1, and capable of ascending or descending with respect to the frame 1. Of course, the frame 1 may be designed as an elevatable frame, and the molding platform 2 is designed as a fixed platform.

In FIGS. 3 to 5, and 8 to 10, two transmission mechanisms 3 are mounted onto the frame 1, and each transmission mechanism 3 comprises a motor 31, a driving wheel module 310, two first driven wheels 32, two second driven wheels 33, a first longitudinal belt 34, a second longitudinal belt 35, a first latitudinal belt 36 and a second latitudinal belt 37.

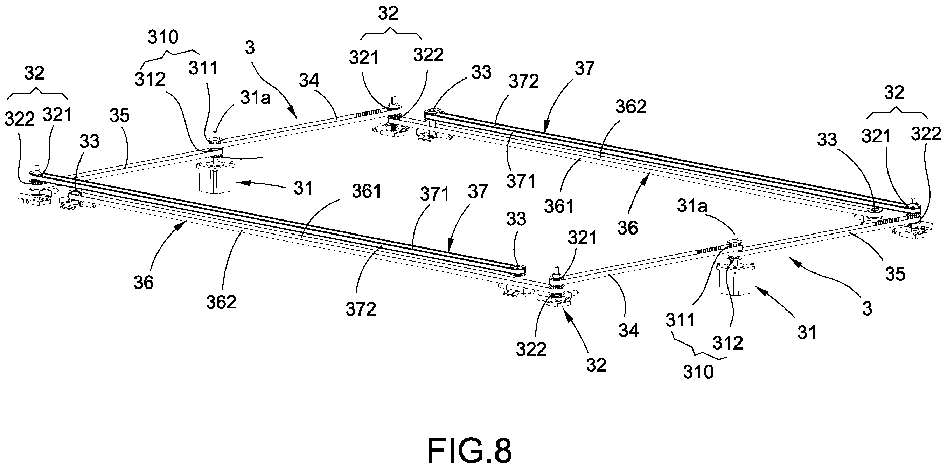

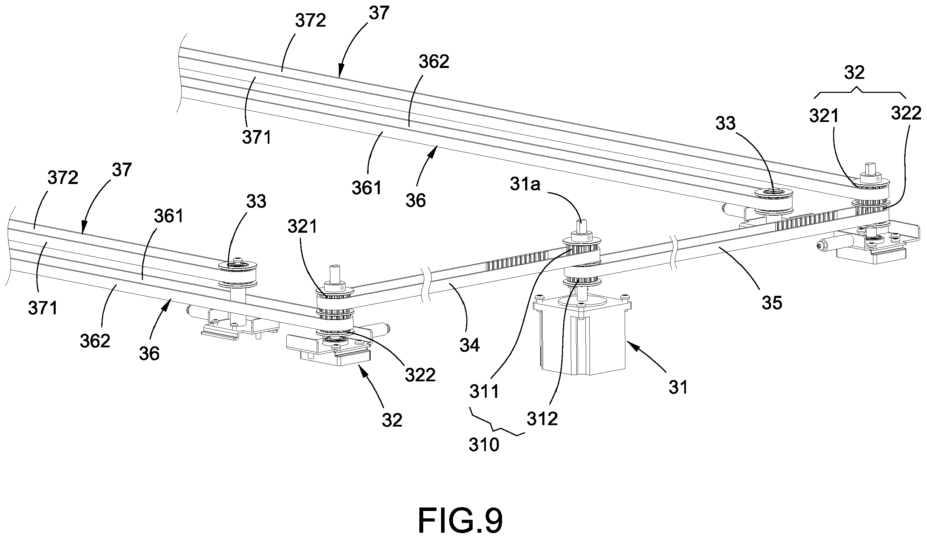

In FIGS. 8 and 9, each motor 31 has a drive shaft 31a, and the driving wheel module 310 includes an upper driving wheel 311 and a lower driving wheel 312 sheathed on and coupled to the drive shaft 31a and operated jointly. In other words, the drive shaft 31a of each motor drives the upper driving wheel 311 and lower driving wheel 312 to rotate jointly in the clockwise or counterclockwise direction.

In each transmission mechanism 3 as shown in FIGS. 3 to 5 and 8 to 10, the two first driven wheels 32 are installed on both left and right sides of the driving wheel module 310 respectively, and each first driven wheel 32 has an upper wheel area 321 and a lower wheel area 322, and the upper wheel area 321 and lower wheel area 322 may rotate jointly in the clockwise or counterclockwise direction.

In each transmission mechanism 3 as shown in FIGS. 3 to 5 and 8 to 10, one of the second driven wheels 33 is installed at the rear of one of the first driven wheels 32, and the other second driven wheel 33 is installed at the rear of the other first driven wheel 32.

In each transmission mechanism 3 as shown in FIGS. 3 to 5 and 8 to 10, the first longitudinal belt 34 is sheathed on and coupled to the upper driving wheel 311 and one of the upper wheel areas 321 and capable of rotating with the upper driving wheel 311. The second longitudinal belt 35 is sheathed on and coupled to the lower driving wheel 312 and one of the lower wheel areas 322 and capable or rotating with the lower driving wheel 312. The first latitudinal belt 36 is sheathed on and coupled to the other lower wheel area 322 and one of the second driven wheels 33 and capable of rotating with the lower wheel area 322. The second latitudinal belt 37 is sheathed on and coupled to the other upper wheel area 321 and the other second driven wheel 33 and capable of rotating with the upper wheel area 321.

In this exemplary embodiment, each motor 31 is fixed to each respective longitudinal section 11, and each second driven wheel 33 is fixed to each respective latitudinal section 12, and each first driven wheel 32 is fixed to each respective corner section 13, so that the first longitudinal belt 34 and second longitudinal belt 35 of each transmission mechanism 3 are jointly disposed in each respective longitudinal section 11, and the first latitudinal belt 36 and second latitudinal belt 37 of each transmission mechanism 3 are disposed in each respective latitudinal section 12.

In FIGS. 8 and 9, one of the second driven wheels 33 of one of the transmission mechanisms 3 is installed at the bottom of the second latitudinal belt 37 of the other transmission mechanism 3, and the other second driven wheel 33 is passed to and installed at the top of the first latitudinal belt 36 of the other transmission mechanism 3, so that each first latitudinal belt 36 and each second latitudinal belt 37 are stacked with each other to save more installation space of the transmission mechanism 3, and further reduce the volume of the 3D printing device 10.

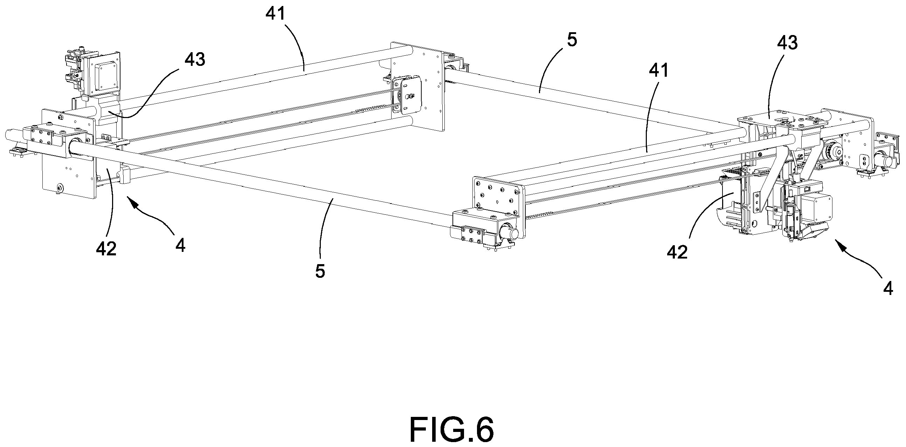

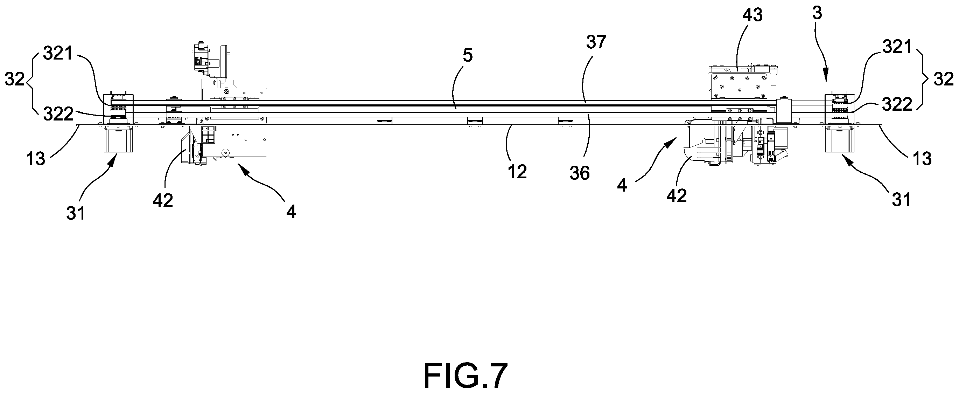

In FIGS. 3 to 10, each print head module 4 spans across and is mounted onto each first latitudinal belt 36 and each second latitudinal belt 37, so that the print head module 4 can move together with each first latitudinal belt 36 and each second latitudinal belt 37.

In each transmission mechanism 3, the first latitudinal belt 36 is divided into a first internal section 361 and a first external section 362, and the second latitudinal belt 37 is divided into a second internal section 371 and a second external section 372.

In FIGS.8 to 10, both of the first latitudinal belt 36 and second latitudinal belt 37 rotate synchronously, so that when an end of any print head module 4 is coupled to the first internal section 361, the other end must be installed to the second external section 372; and when an end of any print head module 4 is coupled to the first external section 362, the other end must be installed to the second internal section 371. Therefore, both ends of the print head module 4 can be moved synchronously.

Further, each print head module 4 comprises a latitudinal rail 41, a print head seat 42 and a driver 43, and each latitudinal rail 41 spans across and is installed onto each respective first latitudinal belt 36 and each respective second latitudinal belt 37. In other words, each latitudinal rail 41 can move together with each first latitudinal belt 36 and each second latitudinal belt 37, and each print head seat 42 is coupled to each latitudinal rail 41, and each driver 43 drives each print head seat 42 to move along each latitudinal rail 41.

In addition, the print head seat 42 moves along the latitudinal rail 41 to define a movement in the x-axis direction, and the latitudinal rail 41 moves with the first latitudinal belt 36 and second latitudinal belt 37 to define a movement in the Y-axis direction, and the molding platform 2 is capable of ascending or descending with respect to the frame 1 to define a movement in the Z-axis direction, so as to achieve three-dimensional movements between the print head seat 42 and the molding platform 2.

In addition, one of the print head seats 42 may be a 3D print head seat or a 3D color print head seat, and the other print head seat 42 may be a 3D print head seat, a color print head seat or a 3D color print head seat, and the 3D print head seat is provided for stacking layers on the molding platform 2 to form a three-dimensional object, and the color print head seat is provided for coloring the three-dimensional object on the molding platform 2, and the 3D color print head seat has the functions of stacking layers to form the three-dimensional object and coloring the three-dimensional object.

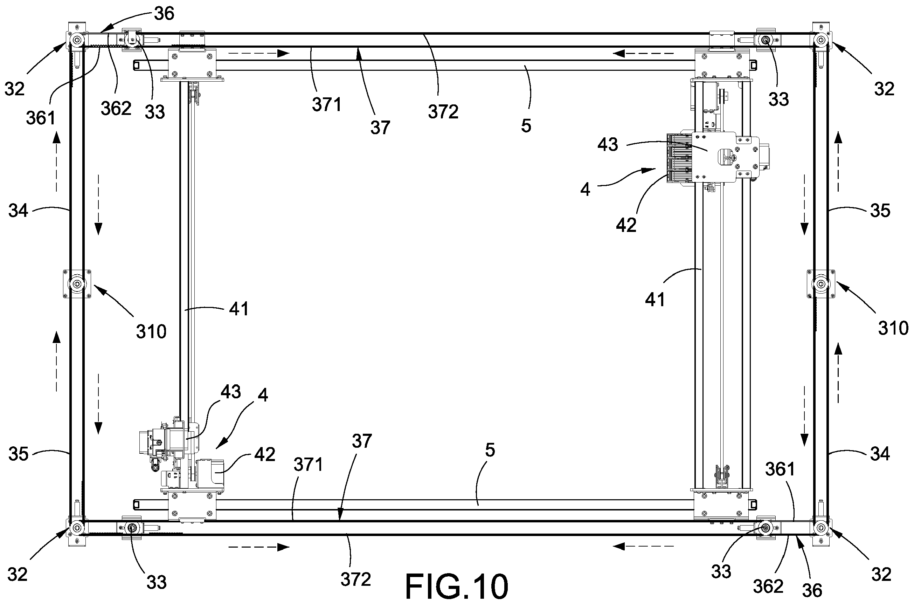

With reference to FIG. 10 for a 3D printing device 10 which is an industrial 3D printer in accordance with this embodiment of the disclosure, the molding platform 2 has a relatively large area, so that the volume the formed three-dimensional object is relatively large as well, and it takes much time for a single print head seat to conduct the three-dimensional molding and coloring operations. Therefore, the 3D printing device 10 usually has two print head modules 4, wherein the print head seat 42 at the lower left corner is a 3D print head seat provided for stacking layers to form the three-dimensional object, and the print head seat 42 at the upper right corner is a color print head seat provided for coloring the three-dimensional object. Each first latitudinal belt 36, each second latitudinal belt 37, each driver 43 and each latitudinal rail 41 drive the two print head seat 42 to perform the three-dimensional molding and coloring operations to the same three-dimensional object alternatively in order to shorten the time for manufacturing a large three-dimensional object. In FIGS. 3 to 7, the 3D printing device 10 of this disclosure further comprises two auxiliary rails 5, each being fixed to the two latitudinal sections 12. In other words, each auxiliary rail 5is mounted onto the frame 1, and one of the auxiliary rails 5 is configured to be corresponsive to the first latitudinal belt 36 and second latitudinal belt 37 of a respective layer, and the other auxiliary rail 5 is configured to be corresponsive to the first latitudinal belt 36 and second latitudinal belt 37 of the other layer, and the latitudinal rails 41 of the two print head modules 4 span across and are slidable on the two auxiliary rails 5.

Each latitudinal rail 41 spans across and is slidable on each auxiliary rail 5, and each latitudinal rail 41 spans across and is mounted onto each respective first latitudinal belt 36 and each respective second latitudinal belt 37, so that both ends of each latitudinal rail 41 are driven by each first latitudinal belt 36 and each second latitudinal belt 37 to slide on each auxiliary rail 5.

With reference to FIGS. 3 to 10 for a using status of a 3D printing device 10 in accordance with this disclosure, the first longitudinal belt 34 of each transmission mechanism 3 is sheathed on and coupled to the upper driving wheel 311 and one of the upper wheel areas 321 and rotated with the upper driving wheel 311, and the first longitudinal belt 34 drives the upper wheel area 321 to rotate. The second longitudinal belt 35 is sheathed on and coupled to the lower driving wheel 312 and one of the lower wheel areas 322 and rotated with the lower driving wheel 312, and the first longitudinal belt 34 drives the lower wheel area 322 to rotate. Finally, the first latitudinal belt 36 is sheathed on and coupled to the other lower wheel area 322 and one of the second driven wheels 33 and rotated with the lower wheel area 322, and the second latitudinal belt 37 is sheathed on and coupled to the other upper wheel area 321 and the other second driven wheel 33 and rotated with the upper wheel area 321, so that the first latitudinal belt 36 and second latitudinal belt 37 can rotate jointly in a clockwise or counterclockwise direction, and then an end of the print head module 4 is installed and coupled to the first internal section 361 and the other end of the print head module 4 is installed and coupled to the second external section 372, or an end of the print head module 4 is installed and coupled to the first external section 362 and the other end of the print head module 4 is installed and coupled to the second internal section 371, so that both ends of the print head module 4 can move synchronously to achieve the effects of driving the print head module 4 by the transmission mechanism 3 to move with respect to the molding platform 2.

In addition, the industrial 3D printing device requires a plurality of print head modules, and the transmission shaft, pulley and bearing seat of the conventional transmission mechanism have the issues of a too-large volume and a too-complicated assembly, and thus the conventional 3D printing devices have no extra space for installing a plurality of transmission mechanisms.

Compared with the prior art, the 3D printing device of this disclosure uses the lower driving wheel 312, lower wheel area 322, first driven wheel 32, second driven wheel 33, first longitudinal belt 34, second longitudinal belt 35, first latitudinal belt 36 and second latitudinal belt 37 to substitute the transmission shaft, pulley and bearing seat of the conventional 3D printing device, so that the volume of the 3D printing device 10 of this disclosure has the advantages of smaller volume, simpler structure, and more convenient repair and maintenance over the prior art.

## Claims

1. A 3D printing device with a dual transmission mechanism, comprising:
a frame (1);
a molding platform (2), disposed at the bottom of the frame (1);
two transmission mechanisms (3), mounted onto the frame (1), and each of the transmission mechanisms (3) comprising:
a motor (31), having a drive shaft (31a);
a driving wheel module (310), including an upper driving wheel (311) and a lower driving wheel (312), both being sheathed on and coupled to the drive shaft (31a) and operated jointly;
two first driven wheels (32), installed onto the left and right sides of the driving wheel module (310) respectively, and each of the first driven wheels (32) having an upper wheel area (321) and a lower wheel area (322);
two second driven wheels (33), installed at the rear side of the two first driven wheels (32) respectively;
a first longitudinal belt (34), coupled to the upper driving wheel (311) and one of the upper wheel areas (321);
a second longitudinal belt (35), coupled to the lower driving wheel (312) and one of the lower wheel areas (322);
a first latitudinal belt (36), coupled to the other lower wheel area (322) and one of the second driven wheels (33); and
a second latitudinal belt (37), coupled to the other upper wheel area (321) and the other second driven wheel (33); and
two print head modules (4), spanning across and mounted onto each first latitudinal belt (36) and each second latitudinal belt (37).

2. The 3D printing device with a dual transmission mechanism according to claim 1, wherein the first latitudinal belt (36) is divided into a first internal section (361) and a first external section (362), and the second latitudinal belt (37) is divided into a second internal section (371) and a second external section (372), and an end of any one of the print head modules (4) is coupled to the first internal section (361), and the other end of the other print head module (4) is coupled to the second external section (372).

3. The 3D printing device with a dual transmission mechanism according to claim 1, wherein the first latitudinal belt (36) is divided into a first internal section (361) and a first external section (362), and the second latitudinal belt (37) is divided into a second internal section (371) and a second external section (372), and an end of any one of the print head modules (4) is coupled to the first external section (362), and the other end of the print head module (4) is coupled to the second internal section (371).

4. The 3D printing device with a dual transmission mechanism according to claim 1, wherein the frame (1) has two opposite longitudinal sections (11), two opposite latitudinal sections (12) and four corner sections (13), and each motor (31) is fixed to each longitudinal section (11), and each second driven wheel (33) is fixed to each latitudinal section (12), and each first driven wheel (32) is fixed to each corner section (13), so that the first longitudinal belt (34) and the second longitudinal belt (35) of each transmission mechanism (3) are jointly disposed at each longitudinal section (11), and the first latitudinal belt (36) and the second latitudinal belt (37) of each of the transmission mechanisms (3) are disposed at each latitudinal section (12).

5. The 3D printing device with a dual transmission mechanism according to claim 4, wherein one of the second driven wheels (33) of one of the transmission mechanisms (3) is disposed at the bottom the second latitudinal belt (37) of the other transmission mechanism (3), and the other second driven wheel (33) is installed and disposed at the top of the first latitudinal belt (36) of the other transmission mechanism (3), so that each first latitudinal belt (36) and each second latitudinal belt (37) are stacked with one another.

6. The 3D printing device with a dual transmission mechanism according to claim 4, further comprising two auxiliary rails (5), each mounted onto the frame (1), and one of the auxiliary rails (5) is configured to be corresponsive to one of the stacked first latitudinal belt (36) and the stacked second latitudinal belt (37), and the other auxiliary rail (5) is configured to be corresponsive to the other stacked first latitudinal belt (36) and the other stacked second latitudinal belt (37), and the two print head modules (4) span across the two auxiliary rails (5) and slideable on the two auxiliary rails (5) respectively.

7. The 3D printing device with a dual transmission mechanism according to claim 6, wherein the two auxiliary rails (5) are fixed to the two latitudinal sections (12) respectively.

8. The 3D printing device with a dual transmission mechanism according to claim 7, wherein each of the print head modules (4) comprises a latitudinal rail (41), a print head seat (42) and a driver (43), and each latitudinal rail (41) spans across and is coupled to each first latitudinal belt (36) and each second latitudinal belt (37), and each latitudinal rail (41) spans across the two auxiliary rails (5) and is slideable on the two auxiliary rails (5), and each print head seat (42) is coupled to each latitudinal rail (41), and each driver (43) is provided for driving each print head seat (42) to move along each latitudinal rail (41).

9. The 3D printing device with a dual transmission mechanism according to claim 8, wherein one of the print head seats (42) is a 3D print head seat or a 3D color print head seat, and the other print head seat (42) is a 3D print head seat, a color print head seat or a 3D color print head seat.

10. The 3D printing device with a dual transmission mechanism according to claim 1, wherein the molding platform (2) is an elevatable platform.
